# EUROPEAN PATENT APPLICATION

(11) **EP 4 329 332 A1**
(43) Date of publication of application: **28.02.2024**
(21) Application number: 22191802.2
(22) Date of filing: 23.08.2022
(51) Int. Cl.: H04R 3/14

(54) **VEHICLE SOUND GENERATOR, METHOD, AND SOFTWARE**

(71) Applicant: Aptiv Technologies Limited, St. Michael (BB)
(72) Inventor: Menne, Roland, Germany (DE)
(74) Representative: Gaunt, Thomas Derrick

(57) **Abstract**

A vehicle sound generator, including a vehicle sound module (4) for generating vehicle sound signals. The vehicle sound signals are based on, at least in part, a vehicle status input, an exterior output for controlling an exterior speaker (2) and an interior output for controlling an interior speaker (3). The vehicle sound module (4) is configured to generate an interior sound signal for outputting through the interior output and an exterior sound signal for outputting through the exterior output. The interior sound signal occupies a lower frequency band than the exterior sound signal.

## Description

### Field

The present disclosure relates to a vehicle sound generator, a method of generating a vehicle sound using the same, and a computer software product. The present disclosure is particularly relevant to vehicle sound generators for replicating combustion engine sounds.

### Background

The increasing prevalence of electric cars (EVs) and hybrids has helped to improve fuel economy and reduce emissions. However, compared to vehicles with gasoline and diesel engines, hybrids and EVs make virtually no noise when traveling in reverse or forward at low speeds. Accordingly, this lack of noise has made electric and hybrid vehicles more likely to be in a collision with a pedestrian than one with an internal combustion engine. To address this issue, it is becoming common to fit hybrids and EVs with a vehicle sound generator (VSG) for replicating combustion engine sounds as an awareness mechanism for pedestrians. For example, an exterior speaker may be installed under a vehicle's hood or bonnet which is controlled by a VSG processor to generate externally audible sounds using software algorithms for multitrack mixing, pitch shifting and amplitude scaling in relation to vehicle speed. As such, the volume of sound generated by the exterior speaker is varied based on speed, allowing pedestrians to hear the artificial noise when the vehicle is too far away to be otherwise heard, but is traveling fast enough to present a hazard.

Such vehicle sound generators are typically designed to have limited impact on the vehicle's existing architecture. For example, the exterior speakers used in VSG systems are required to have low-power consumption and, since they are located under the bonnet or hood in order to be audible to pedestrian's exterior to the vehicle, they must also be able to withstand relatively harsh environmental conditions. Consequently, current VSG speakers are designed to be provided as compact single-box units.

A result of the above constraints means that, due to their compact size and weatherproofing, VSG speakers cannot offer a good low frequency response (e.g. at frequencies below 300 Hz). Consequently, whilst conventional VSGs can perform a utilitarian function of alerting pedestrians, they are unable to provide the deep pitch sounds that would be associated with combustion engines, and particularly those sounds associated with higher-performance vehicles. For example, a V8 engine is often considered to provide a particularly engaging sound characterised by a deep rumble or growl. Conventional VSGs cannot replicate this experience. This is often considered a significant shortcoming with EVs and hybrids, since they cannot deliver this aspect of the driving experience, even when their power performance will often exceed that provided by a conventional V8.

Accordingly, there remains a need to address the above shortcomings associated with conventional VSGs.

### Summary

According to a first aspect, there is provided a vehicle sound generator, including a vehicle sound module for generating vehicle sound signals based on, at least in part, a vehicle status input; an exterior output for controlling an exterior speaker; and an interior output for controlling an interior speaker; wherein the vehicle sound module is configured to generate an interior sound signal for outputting through the interior output and an exterior sound signal for outputting through the exterior output, and wherein the interior sound signal occupies a lower frequency band than the exterior sound signal.

In this way, a vehicle sound generator (VSG) is provided for generating vehicle sounds using two outputs, with the frequency range of each output being optimised for the speakers and environment in the respective output location. That is, by outputting an interior sound signal, which occupies a lower frequency band, the VSG may make use of the larger lower frequency speakers that are typically provided in the vehicle's interior. At the same time, although such speakers are located inside the vehicle cabin, the deep low frequency sounds output by these speakers generally suffer from minimal attenuation by the vehicle chassis. As such, the low frequency sounds are also audible outside the vehicle and can combine with the higher frequency sounds output through an exterior speaker. At the same time, although the low frequency sounds may feel relatively loud to occupants within the vehicle, this typically only adds to their driving experience by replicating the deeper sounds associated with driving a high-performance vehicle. Consequently, together the two outputs provide for an improved frequency response, which isn't limited by the size, power constraints or weatherproofing associated with conventional exterior VSGs. Accordingly, vehicle sounds that more accurately replicate a high-performance combustion engine may be generated, and thereby provide improved safety and a more engaging driving experience. In embodiments, the exterior and/or interior outputs may comprise terminals for connecting to exterior and interior speakers, respectively.

In embodiments, the vehicle sound module includes a frequency filter for filtering simulated vehicle sounds into the interior sound signal occupying a low frequency band and the exterior sound signal occupying a high frequency band. In this way, a complete simulated vehicle sound may be generated according to Original Equipment Manufacturer (OEM) requirements and a filter may be used to divide the signal into the lower and higher frequency components.

In embodiments, the frequency filter includes a low-pass filter for generating the interior sound signal and a high-pass filter for generating the exterior sound signal. In this way, the sound signals may be generated simply based on the predefined cut-off frequencies of the high-pass and low-pass filters.

In embodiments, the vehicle sound generator further includes a first amplifier for amplifying the exterior sound signal applied to the exterior output. In this way, the power of the exterior sound signal may be increased for reducing transmission signal losses and increasing the volume of the sound output through an exterior speaker.

In embodiments, the vehicle sound generator further includes a second amplifier for amplifying the interior sound signal applied to the interior output. In this way, the power of the interior sound signal may be increased for reducing the transmission signal losses and increasing the volume of the sound output through the interior speaker.

In embodiments, the vehicle sound generator further includes an exterior speaker for mounting under a vehicle's hood and for connection to the exterior output for generating sound based thereon. In this way, the VSG may incorporate the exterior speaker and be located where the combustion engine in a non-electric vehicle would typically be found. As such, the sound of a high-performance combustion engine may be replicated more convincingly.

In embodiments, the interior output is configured for connection to an in-vehicle audio system. In this way, the vehicle's interior audio hardware may be used for the additional purpose of outputting the interior sound signal. As such, additional system costs are not incurred.

In embodiments, the interior sound signal is configured for controlling an interior sub-woofer or low-frequency speaker forming part of the in-vehicle audio system. In this way, the VSG is able to provide an improved low-frequency response.

In embodiments, the interior output is configured for connection to the in-vehicle audio system via a power distribution centre (PDC). In this way, the PDC may be used to drive the interior speaker based on the interior sound signal generated by the VSG.

In embodiments, the interior sound signal occupies a frequency band lower than 300 Hz. In this way, deep pitch sounds, such as a deep rumble or growl that are typically characteristic of high-performance vehicles may be generated. In embodiments, the interior sound signal occupies a frequency band lower than 150Hz.

In embodiments, the vehicle sound module comprises a user input for selecting a sound profile, and the vehicle sound module is configured to generate the vehicle sound signals based on, at least in part, the selected sound profile. In this way, a user may be provided with a range of selectable user sounds and be able to select the type or amplitude of the sound generated based on their preferences. For example, a user with young children travelling with them may choose to restrict the volume of the vehicle sounds produced. In embodiments, a volume restrictor may also be provided for this purpose.

In embodiments, the vehicle status input includes at least one of: vehicle speed, engine speed, throttle level, vehicle operating mode, gear selection, ambient noise, and detected emergency sounds. In this way, the VSG may generate appropriate vehicle sounds depending on the prevailing vehicle operating conditions. For example, the VSG may use software algorithms for multitrack mixing, pitch shifting and amplitude scaling to vary the sound signals depending on the prevailing vehicle operating conditions. In other embodiments, emergency sounds such as an ambulance or police siren may be detected and, in response, the volume of the vehicle sounds may be reduced to mitigate the risk of these emergency signal noises being drowned out by the vehicle sounds.

According to a second aspect, there is provided a method of generating a vehicle sound using a vehicle sound generator, including the steps of: generating vehicle sound signals using a vehicle sound module based on, at least in part, a vehicle status input, wherein the generated vehicle sound signals include an exterior sound signal and an interior sound signal occupying a lower frequency band than the exterior sound signal; outputting the exterior sound signal through an exterior output for controlling an exterior speaker; and outputting the interior sound signal through an interior output for controlling an interior speaker.

In embodiments, the step of generating the vehicle sound signals includes filtering, using a frequency filter, a simulated vehicle sound into the interior sound signal occupying a low frequency band and the exterior sound signal occupying a high frequency band.

In embodiments, the method further includes the step of controlling the interior speaker based on the interior sound signal, wherein the interior speaker is one of an interior sub-woofer or low-frequency speaker forming part of the in-vehicle audio system.

According to a third aspect, there is provided a non-transitory computer readable medium including instructions, which when executed by one or more processors, implement the above method. According to a further aspect, there is provided a computer software product including instructions which, when executed by one or more processors, implement the above method.

According to a fourth aspect, there is provided a vehicle comprising: a cabin; a vehicle sound module for generating vehicle sound signals based on, at least in part, a vehicle status input; at least one exterior speaker located exterior to the cabin and for generating sounds based on signals from an exterior output of the vehicle sound module; and an interior speaker located within the cabin and for generating sounds based on signals from an interior output of the vehicle sound module; wherein the vehicle sound module is configured to generate an interior sound signal for outputting through the interior output and an exterior sound signal for outputting through the exterior output, and wherein the interior sound signal occupies a lower frequency band than the exterior sound signal.

### Brief Description of Drawings

Illustrative embodiments will now be described with reference to the accompanying drawings in which:
Figure 1 is a cross-sectional diagram of a vehicle sound generator (VSG) within a vehicle according to an embodiment;
Figure 2 is an example sound spectrum graph of the low frequency portion of a VSG signal; and
Figure 3 is an example sound spectrum graph of the high frequency portion of a VSG signal.

### Detailed Description

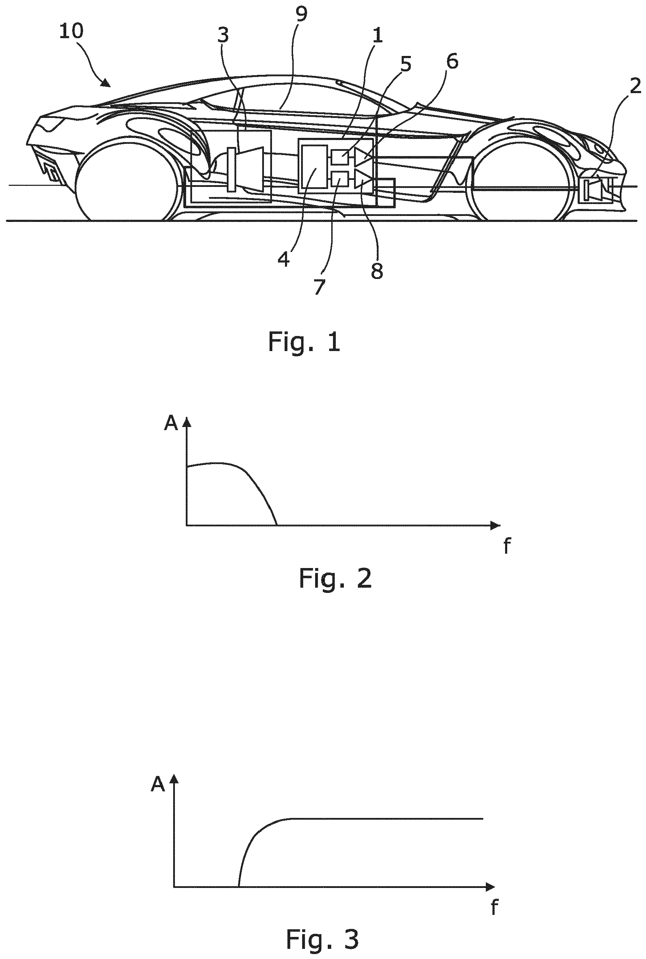

Figure 1 shows a vehicle sound generator (VSG) provided within a vehicle 10. The VSG includes an electronic control unit (ECU) 1 and an exterior speaker 2. At the same time, the vehicle 10 includes an interior speaker 3 which is located within the interior of the vehicle's cabin 9.

The ECU 1 includes a vehicle sound simulator block 4 for generating vehicle sound signals which artificially simulate the noises generated by an internal combustion engine. The vehicle sound simulator block 4 receives a vehicle status input and the generated vehicle sound signals vary based on the vehicle's status. In particular, in this embodiment, the vehicle status input provides an indication of the vehicle's speed, engine speed, throttle level, operating mode, gear selection, and ambient noise levels, and these parameters are used to control the mixing and amplitude of the generated vehicle sound signal. As such, as the vehicle is revved higher or enters a noisier environment, a louder vehicle sound signal is generated. At the same time, the overall sound profile may be set by OEM specifications or according to user preferences. For instance, in embodiments, a user of the vehicle may select different sound modes for replicating different types of combustion engine depending on their preferences.

The ECU 1 further includes a frequency filter block 5,6 for filtering the vehicle sound signals generated by the vehicle sound simulator 4 into high and low frequency parts. In this respect, the frequency filter block includes a high-pass filter 5 and a low-pass filter 7. The high-pass filter 5 is configured to attenuate sound signals below a pre-determined cut-off frequency. As such, lower frequencies are removed to provide a sound signal containing only the high frequency components. Conversely, the low-pass filter 7 is configured to attenuate sound signals above a pre-determined cut-off frequency. As such, higher frequencies are removed to provide a sound signal containing only the low frequency components.

The ECU 1 further includes amplifiers 6,8 communicatively connected to the high-pass and low-pass filters 5,7, respectively. In this embodiment, the amplifiers 6,8 are used to amplify the generated exterior and interior sound signals for transmission through the relatively long cable connections to the interior and exterior speakers. In this embodiment, the exterior amplifier 6 is also used to amplify the exterior sound signal to sufficient power for driving the exterior speaker.

In this embodiment, the exterior speaker 2 is mounted under the hood or bonnet of the vehicle 10, at its front adjacent to an air intake. As such, the exterior speaker 2 is relatively exposed to the exterior of the vehicle. This allows the speaker 2 to be easily heard by pedestrians. Due to the exposed mounting location, the exterior speaker 2 is provided as a weatherproofed unit for resisting moisture ingress and temperature variations. At the same time, as the exterior speaker is driven by the exterior amplifier 6 and used only for generating the higher frequency sounds, it is implemented as a relatively compact speaker design, such as a tweeter or treble speaker. In contrast, the interior speaker 3 is provided as a woofer or bass speaker which forms part of the vehicle's pre-existing audio system within the interior of the cabin 9. That is, the interior speaker 3 is part of the vehicle's music and infotainment system used for outputting low frequency sounds, but is additionally utilised by the VSG.

As will be understood from the above, the sound signal emitted from the high-pass filter 5 and through the exterior amplifier 6 occupies a higher frequency band and is for output through the exterior speaker 2. At the same time, the sound signal emitted from the low-pass filter 7 and through the interior amplifier 7 occupies a lower frequency band and is for output through the interior speaker 3.

In use, the vehicle sound simulator 4 receives a vehicle status input and implements a sound generating algorithm for generating a simulated vehicle sound signal based on the vehicle's status.

The sound signal generated is then filtered through the high-pass and low-pass filters 5,7 to produce two separate signals; the exterior sound signal occupying a relatively higher frequency band, such as in the illustrative exterior sound signal shown in Figure 3, and an interior sound signal occupying a relatively lower frequency band, such as in the illustrative interior sound signal shown in Figure 2.

The amplifiers 6,8 then respectively amplify the exterior and interior signals. The exterior sound signal is conducted to the exterior speaker 2 which then generates the higher frequency sounds of the simulated signal. The interior sound signal is conducted to the interior speaker 3 which then generates the low frequency sounds of the simulated signal. In this way, the low frequency component of the deep combustion engine sounds may be generated using the vehicles interior low frequency speaker or speakers. That is, as these speakers are not constrained by power or size, a much better low frequency response may be achieved. Furthermore, as the low frequency band suffers from relatively minimal attenuation through the chassis of the vehicle 9, these low frequency sounds are nevertheless audible exterior to the vehicle, and without requiring additional hardware.

Accordingly, with the above, an improved VSG is provided, which advantageously uses a combination of both interior and exterior speakers to provide a more realistic simulated engine sound having an improved lower frequency response. Accordingly, a better replication of a high-performance internal combustion engine may be achieved, without being limited by the relatively compact size of the exterior speaker.

It will be understood that the embodiments illustrated above show applications only for the purposes of illustration. In practice, embodiments may be applied to many different configurations, the detailed embodiments being straightforward for those skilled in the art to implement.

For example, in embodiments, the vehicle sound generator may comprise multiple external speakers. For instance, where these speakers are located around the vehicle, they may produce a surround sound effect. In embodiments, for example, the direction of the sound may be varied depending on the vehicle status, such as its direction of movement.

## Claims

1. A vehicle sound generator, comprising:
a vehicle sound module for generating vehicle sound signals based on, at least in part, a vehicle status input;
an exterior output for controlling an exterior speaker;
and
an interior output for controlling an interior speaker;
wherein the vehicle sound module is configured to generate an interior sound signal for outputting through the interior output and an exterior sound signal for outputting through the exterior output, and wherein the interior sound signal occupies a lower frequency band than the exterior sound signal.

2. A vehicle sound generator according to claim 1, wherein the vehicle sound module comprises a frequency filter for filtering simulated vehicle sounds into the interior sound signal occupying a low frequency band and the exterior sound signal occupying a high frequency band.

3. A vehicle sound generator according to claim 2, wherein the frequency filter comprises a low-pass filter for generating the interior sound signal and a high-pass filter for generating the exterior sound signal.

4. A vehicle sound generator according to any preceding claim, further comprising a first amplifier for amplifying the exterior sound signal applied to the exterior output and a second amplifier for amplifying the interior sound signal applied to the interior output.

5. A vehicle sound generator according to any preceding claim, further comprising an exterior speaker for mounting under a vehicle's hood and for connection to the exterior output for generating sound based thereon.

6. A vehicle sound generator according to any preceding claim, wherein the interior output is configured for connection to an in-vehicle audio system.

7. A vehicle sound generator according to claim 6, wherein the interior sound signal is configured for controlling an interior sub-woofer or low-frequency speaker forming part of the in-vehicle audio system.

8. A vehicle sound generator according to claim 6 or 7, wherein the interior output is configured for connection to the in-vehicle audio system via a power distribution centre.

9. A vehicle sound generator according to any preceding claim, wherein the interior sound signal occupies a frequency band lower than 300 Hz.

10. A vehicle sound generator according to any preceding claim, wherein the vehicle sound module comprises a user input for selecting a sound profile, and the vehicle sound module is configured to generate the vehicle sound signals based on, at least in part, the selected sound profile.

11. A vehicle sound generator according to any preceding claim, wherein the vehicle status input comprises at least one of: vehicle speed, engine speed, throttle level, vehicle operating mode, gear selection, ambient noise, and detected emergency sounds.

12. A method of generating a vehicle sound using a vehicle sound generator, comprising:
generating vehicle sound signals using a vehicle sound module based on, at least in part, a vehicle status input, wherein the generated vehicle sound signals comprise an exterior sound signal and an interior sound signal occupying a lower frequency band than the exterior sound signal;
outputting the exterior sound signal through an exterior output for controlling an exterior speaker; and
outputting the interior sound signal through an interior output for controlling an interior speaker.

13. A method according to claim 12, wherein the step of generating the vehicle sound signals comprises filtering, using a frequency filter, a simulated vehicle sound into the interior sound signal occupying a low frequency band and the exterior sound signal occupying a high frequency band.

14. A method according to claim 12 or 13, further comprising the step of controlling the interior speaker based on the interior sound signal, wherein the interior speaker is one of an interior sub-woofer or low-frequency speaker forming part of the in-vehicle audio system.

15. A non-transitory computer readable medium comprising instructions, which when executed by one or more processors, implement the method according to claims 12-14.

16. A vehicle comprising:
a cabin;
a vehicle sound module for generating vehicle sound signals based on, at least in part, a vehicle status input;
at least one exterior speaker located exterior to the cabin and for generating sounds based on signals from an exterior output of the vehicle sound module; and
an interior speaker located within the cabin and for
